# EUROPÄISCHE PATENTANMELDUNG

(11) **EP 0 967 188 A1**
(43) Veröffentlichungstag der Anmeldung: **29.12.1999**
(21) Anmeldenummer: 98121019.8
(22) Anmeldetag: 05.11.1998
(51) Int. Cl.: C04B 30/00, E04B 1/76, F16L 59/04

(54) **Dämmstoff aus Altpapier**

(30) Priorität: 05.11.1997 DE 19748751
(71) Anmelder: Bretscher, Ralf, 97469 Weyer (DE)
(72) Erfinder: Bretscher, Ralf, 97469 Weyer (DE)

(57) **Zusammenfassung**

Bei der erfindung handelt es sich um die herstellung eines neuen Dämmstoffes aus Altpapier mit einem Branschutzzusatz .

## Beschreibung

Die Erfindung richtet sich auf einen Wärmedämmstoff aus Altpapier und einem Brandschutzmittel sowie auf ein Verfahren zur Herstellung desselben. Zur Wärmedämmung werden neben anorganischen Werkstoffen wie Asbest, Glaswolle und Steinwolle auch organische Werkstoffe, wie bspw. Styropor oder Schafwolle, ja sogar zellulosehaltige Werkstoffe wie Holz, Sägemehl, Kork oder Filz verwendet. Beispielsweise offenbart die DE-PS 35 45 001 eine aus Naturprodukten hergestellte Wärmedämmplatte, wobei als Naturprodukte vermahlenes Zeitungspapier Verwendung findet, das zur Vergrößerung der mechanischen Festigkeit pflanzliche oder tierische Naturfasern sowie wasserlöslichen Naturkleber aufweist und zu einer Plane verdichtet ist.
Zwar wird hierbei ein relativ preiswerter Rohstoff, nämlich Zeitungspapier verwendet, indem dieses jedoch zu der Herstellung eines Wärmedämmplatte bis auf eine mehlartige Konsistenz zerkleinert wird, sind einerseits zeit- und energieaufwendige Mahlvorgänge durchzuführen; andererseits kann durch Verpressen eines derartigen Pulvers keine mechanische Stabilität erreicht werden, so daß noch pflanzliche oder tierische Naturfasern hinzugegeben werden müssen. Selbst diese Maßnahme istjedoch für sich genommen noch nicht ausreichend, um die Festigkeit des vorbekannten Wärmedämmstoffs zu erhöhen; vielmehr muß zusätzlich noch ein Naturkleber eingesetzt werden, um eine der weiteren Verarbeitung zugängliche Plane zu erhalten. Diese zusätzlichen Bestandteile, insbesondere der Kleber, ziehen jedoch eine Verteuerung des Produkts nach sich. Außerdem ist bei zellulosehaltigen Werkstoffen und auch bei Zeitungspapier die Entzündungsgefahr besonders hoch. da bspw. bei Holz bereits ab einer Temperatur von etwa 2750C eine Verkohlung einsetzt und die dadurch gebildete, kohleartige Substanz aufgrund ihrer inneren Struktur ohne weitere Temperaturerhöhung schließlich Feuer fängt. Aufgrund dieser negativen Eigenschaft wird der Wärmedämmplatte gemäß der DE- PS 35 45 001 ein Brandschutzmittel in Form einer Mischung aus Borax und Borsäure beigemengt. Hierdurch läßt sich zwar die Brandgefahr deutlich reduzieren, die Verwendung der oben genannten Substanzen bringt je doch eine Reihe von Nachteilen mit sich: Einerseits ist weder Borax noch Borsäure ungiftig. Boraxrauch reizt Nasen- und Rachenschleimhäute. Die Einnahme größerer Mengen ruft Mageuschmerzen, Erbrechen und Durchfall sowie Kreislaufschwäche bis zum Schock hervor. Die Toxizität von Borsäure ist erwiesen. Ihre Anwendung in Form von sog. Borsalben und -pudern führte sogar zu einigen schließlich tödlichen Vergiftungsfällen. Mit derartigen Substanzen vermengte Wärmedämmstoffe geben demnach ständig giftige Substanzen ab, wobei schon bei einer zusätzlichen Erwärmung auf etwa 1000C ein regelrechtes Verdampfen einsetzt Andererseits liegt der Preis für 1 kg Borax und/oder Borsäure gegenwärtig etwa bei DM 10,-, so daß die relativ niedrigen Kosten des eigentlichen, zellulosehaltigen Wärmedämmstoffs nicht vorteilhaft genutzt werden können, sondern sogar ein Endprodukt entsteht, das deutlich teurer ist als bspw. Glas- oder Steinwolle . Weiterhin beschreibt die DE-OS 29 23 587 ein Verfahren, um ein Zellulosematerial feuerbeständig zu machen. Hierbei wird als Rohstoff Holz eingesetzt, und zwar entweder in Form von Sägemehl oder in Form von Holzspänen. Das als Abfallprodukt anfallende und daher viel preiswertere Altpapier findet bei dieser Vorerfindung jedoch keine Anwendung. Außerdem liegt auch hier sowohl bei Verwendung von Sägemehl sowie auch bei Verwendung von Holzspänen eine Substanz vor, die nicht durch Verpressen verfestigt werden kann und wiederum den Zusatz von Klebstoff erfordert Schließlich wird hier der Holzrohstoff zur Imprägnierung in einer wäßrigen Lösung getränkt, in der mehrere Komponenten gelöst sind, nämlich zumindest Phosphorsäure einerseits und ein Ammoniumsalz andererseits. Aufgrund der von dem Vorerfinder angeregten Mengenverhältnisse dringt dabei nur ein verschwindend geringer Anteil des Ammoniumsalzes in die Holzpartikel ein, so daß der feuerhemmende Effekt äußerst gering ist. Deshalb könnte dieses Verfahren keinesfalls in Verbindung mit Altpapier angewendet werden, dessen Entzündungspunkt naturgemäß noch unterhalb des Flammpunktes von Holz liegt . Schließlich ist der US-PS 3,840,388 ein Verfahren zur Imprägnierung von Holzlaminaten zu entnehmen. Diese Holzlaminate sollen dabei nicht als Wärmedämmstoffe Verwendung finden, sondern der üblichen Verwendung von Sperr- oder Furnierholz zugeführt werden. Daher ist hier ein auch nur teilweiser Ersatz durch Altpapier nicht möglich, da mit Altpapier weder die Festigkeit eines Holzlaminats noch die insbesondere bei Verwendung als Furnierholz erforderliche Maserung erreicht werden kann. Andererseits sind aber die Holzrohstoffe viel teurer als Altpapier, so daß es völlig sinnlos wäre, dieselben ausschließlich für die Herstellung einer Wärmedämmplatte zu verwenden. Die Holzplatten werden zwar zunächst mit einer Lösung eines Brandschutzmittels behandelt, wobei u. a. auch Ammoniumsulfat Verwendung finden kann, hierbei ist jedoch eine erhöhte Temperatur des Lösungsmittels von etwa 75 bis 950C notwendig. so daß dieses Verfahren sehr energieintensiv ist. Außerdem verbleiben die Holzplatten für einen relativ kurzen Zeitraum von 3 bis 12 Minuten in dem Lösungsmittel, so daß wiederum nur ein äußerst geringer Anteil des Ammoniumsulfats in die Holzplatten eindringen kann. Ein derart geringer Anteil wäre bei Verwendung von Altpapier als Brandschutzmittel völlig unzureichend. Aus diesen Nachteilen vorbekannter Wärmedämmstoffe und Imprägnierverfahren resultiert das die Erfindung initiierende Problem, einen Wärmedämmstoff auf der Basis von Altpapier zu schaffen, der einerseits eine ausreichende Festigkeit haben soll, um bspw. in Form von Wärmedämmplatten verarbeitet werden zu können, der darüber hinaus schwer entflammbar, zudem nicht gesundheitsschädlich und schließlich auch möglichst preisgünstig sein soll, um bspw. mit Glas- oder Steinwolle konkurrieren zu können. Mit dieser Aufgabenstellung untrennbar verknüpft ist die weitere Problematik, ein Herstellungsverfahren Bär den neuen Wärmedämmstoff aufzuzeigen. Zur Lösung des Hauptproblems sieht die Erfindung einen Wärmedämmstoff aus Altpapier und einem Brandschutzmittel vor, wobei das Altpapier in zu Schnipseln zerkleinerter Form enthalten ist, und wobei das Brandschutzmittel aus Ammoniumsulfat besteht Das Altpapier dient aufgrund seiner niedrigen Wärmeleitfähigkeit als thermische Isolation . Die Gesundheits- schädlichen Eigenschaften des früher häufig zur Wärmedämmung verwendeten Asbest, dessen Mikrofasern eingeatmet werden und Lungenkrebs auslösen können, sind durch Verwendung von Altpapier umgangen.

Andererseits wird auf die Beimischung der ebenfalls gesundheitsschädlichen Brandschutzmittel Borax und Borsäure verzichtet und stall dessen Ammoniumsulfat eingesetzt. aus alledem resultiert ein insgesamt verträglicher Wärmedämmstoff der keinerlei gesundheitsschädliche Wirkungen auslöst.
Außerdem ist Papier leicht zu zerkleinern was das Zermahlen in einen faserigen zustand noch einfacher macht. Andererseits bleibt dadurch die Festigkeit des Altpapiers erhalten und durch dessen verfilzende Wirkung wird ein zusätzlicher Klebstoff überflüssig. Da Altpapier gegenüber Borax und sehr preisgünstig ist , kann der erfindungsgemäße Wärmedämmstoff hinsichtlich seiner Wirtschaftlichkeit mit Glas- oder Steinwolle konkurrieren.
Es hat sich als günstig erwiesen , daß der Anteil des Altpapiers bei 50-98Gew.-% und der Anteil des Ammoniumsulfats bei 2-50 Gew.-% liegt. Das bevorzugte Mengenverhältnis liegt bei etwa 65-90Gew.-% des Altpapiers und 10-35Gew.-% des Ammoniumsulfats . In diesem Mischungsverhältnis ist die thermische Isolationsfähigkeit des Altpapiers dominierend, während das Ammoniumsulfat seine flammenhemmende Wirkung voll entfaltet.

Das erfindungsgemäße Verfahren zur Herstellung des Wärmedämmstoffs zeichnet sich dadurch aus, daß Altpapier in welcher Form es auch anfällt auf Schnipselgröße zerkleinert, metallische Teilchen entfernt werden und zusammen mit Ammoniumsulfat einer Papiermühle (Siebkorb, Schneidmühle oder einer ähnlichen art von Mühlen) zugeführt wird. Das Hierbei verwendete Ammoniumsulfat hat eine korngröße von 1µm - 1mm . Während des mahlvorgangs wird das Papier zermahlen und durch die Rotierende Bewegung der Papiermühle mit dem Ammoniumsulfat vermischt . Beim Weitertransport durch Sauggebläse entstehen Luftverwirbelungen die nochmahls zum vermischen der beiden Substanzen beitragen. Der dadurch entstandene Wärmedämmstoff hat eine Dichte zwischen etwa 0,025g/cm³ und 0,10g/cm³ (entspricht 25 bis 100kg/m³).
Durch gängige Verpackungsmethoden (z.B. Ballenpressen o. ähnliches ) kann das Wärmedämmaterial verpackt und dem Entverbraucher angeboten oder Transportiert werden. Schließlich kann das Entprodukt auf vielfältige Arten verarbeitet werden, z.B. durch Einblasen in Hohlräume.

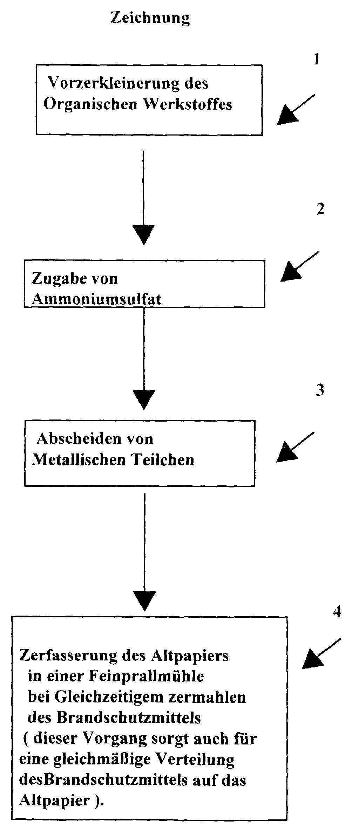

## Patentansprüche

1. Wärmedämmstoff aus Altpapier und einem Brandschutzmittel, **dadurch gekennzeichnet** ,daß das Altpapier und Brandschutzmittel in zermahlener form enthalten ist, und daß das Brandschutzmittel aus Ammoniumsulfat besteht.

2. Wärmedämmstoff nach Anspruch 1 dadurch gekennzeichnet, daß der Anteil des Altpapiers bei 50-98Gew.-% und der Anteil des Ammoniumsulfats bei 2-50 Gew.-% liegt.

3. Verfahren zur Herstellung eines Wärmedämmstoffs, dadurch gekennzeichnet , das Altpapier auf Schnipselgröße zerkleinert metallischen Teilchen entfernt werden , und anschließend zusammen mit Ammoniumsulfat in einer Papiermühle zermahlen wird.

4. Verfahren nach Anspruch 3, dadurch gekennzeichnet, daß pro kg des Altpapiers 20-500g Ammoniumsulfat verwendet werden.

5. Verfahren nach Anspruch 4 dadurch gekennzeichnet, das der durch den Mahlvorgang entstandene Dämmstoff nach dem zermahlen in Hohlräume eingefüllt wird .
